# EUROPEAN PATENT APPLICATION

(11) **EP 4 108 363 A1**
(43) Date of publication of application: **28.12.2022**
(21) Application number: 21180935.5
(22) Date of filing: 22.06.2021
(51) Int. Cl.: B22F 10/14, B28B 1/00, B33Y 10/00, C08F 265/04, C08L 51/00

(54) **MATERIAL SYSTEM FOR 3D PRINTING**

(71) Applicant: Evonik Operations GmbH, 45128 Essen (DE)
(72) Inventor: The designation of the inventor has not yet been filed
(74) Representative: Evonik Patent Association

(57) **Abstract**

The present disclosure provides a material system for three-dimensional printing, which includes (a) a powder composition comprising polymer particles and (b) a liquid binder comprising a material polymerizable by free radial polymerization that comprises from 1 to 20 wt.% of one or more than one volatile ethylenically unsaturated monomer. Such material system enables to prepare articles by 3D printing which have good green body strength and form stability upon curing at elevated temperatures. The final cured three-dimensional articles have mechanical properties, which render them suitable for end use applications.

## Description

### TECHNICAL FIELD

The present disclosure relates to a material system for three-dimensional (3D) printing and printed three-dimensional articles obtainable therefrom.

### TECHNICAL BACKGROUND

According to the ISO/ASTM 52921/2017 standard, there are different categories of 3D printing processes in additive manufacturing. This involves material extrusion, vat photopolymerization, material jetting, sheet lamination, direct energy deposition, powder bed fusion and binder jetting. The binder jetting process is also referred to in the literature as "3D printing", "powder 3D printing" or "powder binder jetting".

In the binder jetting process, a powder bed is applied layer by layer and a liquid binder is selectively applied to individual areas of each layer, for example, using a commercially available inkjet printing head. Typically, a computer aided design (CAD) file is used to define which area of the powder layer is to be printed with the binder. The application of the binder alternates with application of new powder layers. The selective application of the binder results in solidification of these areas. Thereby, a three-dimensional object is formed in the powder bed layer by layer by applying the binder locally to the specified areas of the new powder layers. Once the printing process is completed, the 3D object can be removed from the powder bed and optionally subjected to a post-processing procedure.

Various materials can be used as binder and as powder beds in binder jetting. Materials used in powder beds are typically sand, metal, ceramic or polymer particles. Binders typically consist of solvents, solubilized oligomers or polymers, chemically curable monomers, crosslinkers, monomer functionalized oligomers or polymers, catalysts, accelerators, and additives to adjust the rheology of the binders, e.g., surface tension or viscosity.

The composition of the binder determines the particle binding concept. Binders, which consist only of solvents, fuse the powder particles by means of cold welding. The solvent solubilizes and/or swells the particle surface and, in case of polymer particles, mobilizes the polymer chains on the particle surface. The entanglement of the polymer chains results in fusing of the powder particles, e.g., at the contact points between the particles. After evaporation of the solvent, a highly porous object is obtained. Solubilized oligomers or polymers can also be used as binders for cold welding. The oligomers or polymers do not evaporate, but rather contribute to enhance the connection between the particles.

Apart from cold welding, reactive binding systems are also known. The binders used for these systems are typically chemically curable monomers, crosslinkers, monomer-functionalized oligomers or polymers, catalysts or accelerators. After application, the binder is cured in the powder bed. Depending on the amount used, the binder fills up (part of) the pore volume in the bulk powder. As a result, a dimensionally stable object is formed. In case of reactive curing binder system, a component essential for curing, e.g., a catalyst, an initiator, or an accelerator, is typically added to the powder bed rather than the binder to prevent premature curing in the printhead. Curing takes place when the binder is applied to the powder bed and the component essential for curing is dissolved by the applied binder. Alternatively, the component required for curing can be applied via a second print head or a multi-channel print head in a separate formulation.

Typically, the printing process is followed by a post-processing step. The post-processing step can be, e.g., an oven heating step in which the 3D object is cured for a certain time at a certain temperature. The post-processing is typically used to remove solvent from the final object. In case of metal and ceramic powders, binder components are often completely removed thermally in addition to the solvent, and the remaining powder particles are compacted via sintering to produce a dense object. In case of polymer powders, chemical reactions are often initiated in the post-processing in addition to the removal of solvents.

Binder jetting has great advantages over other 3D printing processes such as powder bed fusion or directed energy deposition, which are based on melting the material from which the product is formed. Binder jetting has the best suitability among all known methods for directly realizing colored objects without subsequent coloring. Binder jetting is further suitable for producing particularly large articles. In addition, other 3D printing processes are very time-consuming in terms of the entire printing process up to the finished object.

A disadvantage of binder jetting is the method-related porosity of the finished object. Tensile strengths of only 2 to 5 MPa and elongations at break of 1% are thus achieved for objects printed by binder jetting, which are bonded by cold welding and/or chemical reaction. As a result, the binder jetting process has so far been used mainly for the production of decorative pieces or for casting molds. The porosity results in particular from the fact that in binder jetting processes only part of the cavities between the particles is filled by the binder. This is an inevitable consequence of the low viscosity of the liquid binder applied in the printing process. Increased binder application leads to migration into the adjacent powder areas, which leads to an increase in object dimensions and can result in a loss of shape accuracy, edge sharpness and possibly surface quality of the finished article.

Binder jetting also often fails to form 3D objects with sufficient green body strength to allow the green body objects to be unpacked from the powder bed and moved to post-processing steps. Without sufficient green body strength, only a limited selection of object geometries can be produced by binder jetting. Alternatively, the objects in the powder bed must be subjected to oven curing. This is disadvantageous because the thermal stress reduces the recyclability of the powder, e.g., due to the thermally induced reaction of the reactive components in the powder bed. In addition, the uniform temperature control of large powder beds with thermally poorly conducting polymer particles is technically very complex. Depending on the size of the powder bed, very long heating and cooling times are necessary, which makes such a process economically unattractive.

DE 10 2008 058 378 A1 relates to a process for layer-by-layer formation of plastic model parts, wherein a particulate material is applied to a building platform and subsequently a second material that comprises N-vinyl formamide is selectively applied by a print head to locally harden the particulate material, repeating these steps for forming the plastic model part. Use of N-vinyl formamide is mentioned to be beneficial due to its high dissolving power and low vapor pressure leading to form stability and good edge sharpness. N-vinyl formamide has though stability issues and is harmful to health including a carcinogenic potential. Residual N-vinyl formamide monomer in the final formed parts thus causes risks to the health of users.

DE 10 2010 056 346 A1 relates to a binder jetting process making use of a binder comprising a diamine and a dicarbonyl compound, which undergo a polycondensation reaction forming a polyimine to locally bind particles of a powder material together.

DE 10 2004 025 374 A1 is directed towards a 3D printing process, wherein two different reactive components are applied by printing heads to a basis reactive component and the conditions are varied to create a gradient transition from a first region with material properties formed mainly or exclusively by reaction of the first reactive component with the basis reactive component and a second region having material properties formed mainly or exclusively by reaction of the second reactive component with the basis reactive component. The material system is preferably based on polyaddition reactions, in particular forming polyurethanes.

DE 10 2007 061 445 A1 relates to a liquid resin for use as a binder for the production of polymer articles by 3D printing, the resin comprising at least styrene, hydroxyethyl methacrylate, maleic acid anhydride and at least one bifunctional acrylate or methacrylate. The resinous binder is used in combination with a polymer powder or mixture of polymer powders and further additives such as initiators and accelerators for polymerizing the binder to locally harden the powder bed.

DE 100 26 955 A1 discloses a material system for use in 3D printing that comprises a solvent, a binder that is soluble in the solvent and optionally fillers, wherein the material system further characteristically contains two complementary polyelectrolytes such as basic and acid PVP and/or an initiator, which are maintained to enhance binding between particles by acid-base interactions and/or initiator-induced additional crosslinking.

WO 2020/109358 A1 relates to a thermally curable composition for use as a binder in a binder jetting process, the composition comprising a solvent and one or more monomers for the production of a polyester, polyamide or polyester amide via a polycondensation reaction, wherein at least one monomer is at least trifunctional. The composition is reported to be rapidly drying and curing at relatively low temperature, yielding a high green body strength and good thermal removability. The polycondensation reaction requires heating to comparatively high temperatures of at least 130°C, preferably in a range of 170 to 200°C, which is not economic.

Accordingly, it is an objective of the present invention to alleviate or avoid the disadvantages of the prior art. The present invention aims to attain a high degree of monomer conversion and, in particular, to provide 3D printed articles with sufficient green body strength that can be achieved at ambient conditions. Sufficient green body strength allows removal from the powder bed and handling without deformation or damage. It is further an objective to provide green bodies exhibiting enhanced form stability upon curing at elevated temperatures facilitating curing at elevated temperatures outside of the powder bed and without the need of a support structure. Another object of the present invention is to provide final cured 3D printed articles having enhanced mechanical properties, such as higher tensile strength and/or elongation at break. It is particularly desirable to provide final cured 3D printed articles with mechanical properties that make them suitable for end use applications.

### SUMMARY OF INVENTION

It has now surprisingly been found that the above objective can be achieved by a material system as specified in appended independent claim 1. Specific or preferred variants of the of the material system present invention are set forth in the dependent claims.

The present invention accordingly relates to a material system for three-dimensional printing comprising:
(a) a powder composition comprising polymer particles, and
(b) a liquid binder comprising a material polymerizable by free radial polymerization comprising from 1 to 20 wt.% of one or more than one volatile ethylenically unsaturated monomer(s) having a vapor pressure in a range from 5 to 500 hPa at a temperature of 20°C, based on the total weight of the liquid binder.

The present invention is further directed towards the use of the material system according to the present invention described above and, in more detail, below for three-dimensional printing. It also concerns three-dimensional articles prepared by three-dimensional printing using the material system according to the present invention described above and, in more detail, below.

The material system of the present invention provides various advantages. Thus, the material system according to the present invention exhibits good processability, including good printability of the liquid binder, and can be used with established 3D printing equipment without problems such as a clogging of printheads. It enables to prepare articles by 3D printing which may attain at ambient conditions sufficient green body strength to allow taking out of the powder bed and handling without deformation or damage, indicative of relatively high degrees of monomer conversion. The green bodies obtainable from the material system according to the present invention moreover exhibit significantly enhanced form stability upon curing at elevated temperatures. This facilitates curing of the printed parts, including those with free-standing portions, at elevated temperatures to achieve their final properties outside of the powder bed, e.g. in an oven, without thermally-induced deformations, without the need of a support structure. The not solidified powder in the powder bed is accordingly not subject to thermal ageing or degradation promoting its recyclability. The final cured three-dimensional printed articles obtainable from the material system of the present invention are comparatively dense and exhibit significantly enhanced mechanical properties, such as a substantially higher tensile strength and/or elongation at break, compared to rather porous parts obtainable from conventional commercially available material systems for three-dimensional printing, without notable anisotropies of the mechanical properties related to the printing process. The final cured three-dimensional articles obtainable from the material system of the present invention may attain mechanical properties, which render them suitable for end use applications. The material system of the present invention may be formulated based on REACH-compliant components, avoiding harmful, e.g. carcinogenic substances. Owing to the attainable high degrees of monomer conversion the content of residual monomers in the final printed parts and related emissions of volatile organic components from the final part can be low.

These and other optional features and advantages of the present invention are described in more detail in the following description.

### DETAILED DESCRIPTION

As used herein, the term "comprising" is understood to be open-ended and to not exclude the presence of additional undescribed or unrecited elements, materials, ingredients or method steps. The terms "including", "containing" and similar terms are understood to be synonymous with "comprising". As used herein, the term "consisting of" is understood to exclude the presence of any unspecified element, ingredient or method step. Use of open-ended language such as "comprising", "including" or "containing" accordingly encompasses, inter alia, the "consisting of" case, but is not limited thereto and allows for the presence of additional undescribed or unrecited elements, materials, ingredients or method steps. For example, a material system, composition or component stated to "comprise" or "include" a certain recited element or ingredient can consist of the recited element or ingredient (or in other words be the recited component) or further contain one or more unrecited element(s) or ingredient(s).

As used herein, the singular form of "a", "an", and "the" include plural referents unless the context clearly dictates otherwise.

Unless indicated to the contrary, the numerical parameters and ranges set forth in the following specification and appended claims are approximations. Notwithstanding that the numerical ranges and parameters setting forth the broad scope of the invention are approximations, the numerical values set forth in the specific examples are reported as precisely as possible. Any numerical values, however, contain errors necessarily resulting from the standard deviation in their respective measurement.

Also, it should be understood that any numerical range recited herein is intended to include all subranges subsumed therein. For example, a range of "1 to 10" is intended to include any and all sub-ranges between and including the recited minimum value of 1 and the recited maximum value of 10, that is, all subranges beginning with a minimum value equal to or greater than 1 and ending with a maximum value equal to or less than 10, and all subranges in between, e.g. 1 to 6.3, or 5.5 to 10, or 2.7 to 6.1.

As used herein, the term "polymer" means homopolymers (e.g., prepared from a single monomer species), copolymers (e.g., prepared from at least two monomer species), and graft polymers.

As used herein, the term "(meth)acrylate" and similar terms, such as "(meth)acrylic acid ester" means methacrylates and/or acrylates. Moreover, the term "(meth)acrylic acid" as used herein means methacrylic acid and/or acrylic acid.

As mentioned above, the present invention relates to a material system for three-dimensional printing, which comprises a powder composition comprising polymer particles and a liquid binder comprising a material polymerizable by free radical polymerization. The powder composition and the liquid binder of the material system are typically provided as separate components. The liquid binder may be printed onto a layer of the powder composition to locally solidify the powder layer allowing to build layer by layer a three-dimensional article as will be described further below in more detail. Solidification may involve filling of the void space between the powder particles by the liquid binder, local dissolution or swelling of powder particles by contact with the binder, physical binding, for example by entanglement of polymer chains, and chemical reactions, particularly a polymerization of the polymerizable material of the binder.

The material system accordingly includes a powder composition. "Powder composition" as used herein means a composition in the form of a powder, that is bulk solid matter composed of many fine particles, which may flow freely. The powder composition used in the material system according to the present invention comprises polymer particles. The type of polymer is not particularly limited, such that particles of any known kind of polymer can in principle be used in the powder composition. For instance, the first type of polymer particles and/or the second type of polymer particles comprising polyetherketone such as polyaryletherketone (PAEK), polyetheretherketone (PEEK) and poly(etherketoneketone) (PEKK); polyethersulfone (PES); polyimide (PI); polyetherimide (PEI); polyester, such as polybutylene terephthalate (PBT); polyamide (PA); polycarbonate (PC); polyurethane (PU); polyvinyl chloride (PVC); polyoxymethylene (POM); polyvinyl acetate (PVA); poly(meth)acrylate, such as polymethylmethacrylate (PMMA), and polymethylacrylate (PMA); polystyrene (PS); polyethylene (PE); polypropylene (PP); acrylonitrile butadiene styrene (ABS) copolymer; polycarbonate acrylonitrile butadiene styrene blends (PC-ABS); or mixtures or copolymers thereof can be used in the practice of the present invention. Such polymers can be obtained by polymerization of respective monomers and/or oligomeric materials according to common polymerization techniques, such as emulsion or suspension polymerization, which are as such well known in the art and therefore not described here in more detail. Polymer powders can be obtained by separating the polymer particles from the liquid phase, such as by filtering or decanting and subsequent drying at room temperature, e.g. temperatures in a range of from 18 to 25 °C, or at elevated temperature, e.g. temperatures in the range of from 40 to 50 °C. Polymer powders can also be obtained for example by spray drying of respective polymer dispersions, by wet grinding of respective polymer suspensions, by cryogenic grinding of bulk polymers or by melt emulsification of polymer suspensions.

The polymer particles used in the powder composition of the present invention preferably comprise acrylic polymer particles. An "acrylic polymer" as used herein means a polymer comprising at least 50 wt.% of constituting units derived from (meth)acrylate monomers. Suitable (meth)acrylate monomers may be selected from, but not limited to, alkyl (meth)acrylates, such as methyl (meth)acrylate, ethyl (meth)acrylate, propyl (meth)acrylate, butyl (meth)acrylate, hexyl (meth)acrylate, ethyl hexyl (meth)acrylate, iso-octyl (meth)acrylate, cyclohexyl (meth)acrylate, nonyl (meth)acrylate, decyl (meth)acrylate, dodecyl (meth)acrylate and combinations thereof; hydroxyalkyl (meth)acrylates; such as hydroxyethyl (meth)acrylate, hydroxypropyl (meth)acrylate, hydroxybutyl (meth)acrylate, and combinations thereof, preferably alkyl (meth)acrylates, such as methyl (meth)acrylate, ethyl (meth)acrylate, propyl (meth)acrylate, butyl (meth)acrylate, hexyl (meth)acrylate, ethyl hexyl (meth)acrylate, iso-octyl (meth)acrylate, cyclohexyl (meth)acrylate and combinations thereof. The acrylic polymer particles can in particular be made by suspension polymerization. Such beaded acrylic polymers are commercially available for example as Degacryl^{®} polymers from Evonik Operations GmbH such as Degacryl^{®} MW134, Degacryl^{®} MW422, Degacryl^{®} M286, Degacryl^{®} M527, Degacryl^{®} 6606F or Degacryl^{®} 6946F.

The powder composition according to the present invention can comprise one type of polymer particles or a plurality of, such as two, three or more, different types of polymer particles. In a preferred practice, the powder composition used in the material system of the present invention comprises a plurality of different types of acrylic polymer particles. For example, the powder composition may comprise a first type of acrylic polymer particles. The first type of acrylic polymer particles can in particular comprise at least 60 wt.%, such as at least 63 wt.%, or at least 65 wt.%, or at least 67 wt.%, or at least 70 wt.% of structural units derived from methyl methacrylate

The first type of acrylic polymer particles may have a glass transition temperature of less than 120°C, such as less than 115 °C, or less than 110 °C, or less than 100 °C. The first type of acrylic polymer particles may have a glass transition temperature of 80 °C or more, such as 85 °C or more, or 90 °C or more. A person skilled in the art will appreciate that any range between any of the explicitly disclosed lower and upper limit is herein disclosed. The first type of acrylic polymer particles may have a glass transition temperature in a range of from 80 to 120 °C, such as from 80 to 110 °C, or from 90 to 110 °C. The glass transition temperatures of the acrylic polymer particles refer to glass transition temperatures as determined by differential scanning calorimetry (DSC). The skilled person is aware in this context that DSC is only sufficiently conclusive if, after an initial heating cycle to a temperature that is at least 25 °C above the highest glass transition or melting temperature but at least 20 °C below the lowest decomposition temperature of a material, the material sample is kept at this temperature for at least 2 min. The sample is then cooled down to a temperature of at least 20 °C below the lowest glass transition or melting temperature to be determined, whereby the cooling rate should be a maximum of 20 °C/min, preferably a maximum of 10 °C/min. After a further waiting time of a few minutes, the actual measurement then takes place, during which the sample is heated to at least 20 °C above the highest melting or glass transition temperature at a heating rate of generally 10 °C/min or less. The respective highest and lowest limit temperatures can be roughly specified in simple preliminary measurements with a separate sample.

The first type of acrylic polymer particles may be present in the powder composition in an amount of at least 60 wt.%, such as at least 62 wt.%, or at least 65 wt.%, or at least 67 wt.%, or at least 70 wt.%, based on the total weight of the powder composition. The first type of acrylic polymer particles may be present in the powder composition in an amount of up to 100 wt.%, such as up to 95 wt.%, or up to 92 wt.%, or up to 90 wt.%, or up to 88 wt.%, or up to 85 wt.%, based on the total weight of the powder composition. A person skilled in the art will appreciate that any range between any of the explicitly disclosed lower and upper limit is herein disclosed. The first type of acrylic polymer particles may be present in the powder composition in an amount of from 60 to 100 wt.%, preferably from 60 to 95 wt.%, more preferably from 60 to 90 wt.%, even more preferably from 60 to 85 wt.%, based on the total weight of the powder composition.

The powder composition can optionally further comprise one or more additional type(s) of acrylic polymer particles, which differ from the first type of acrylic polymer particles in their chemical composition and/or physical properties such as the glass transition temperature. For instance, the powder composition can comprise a second type of acrylic polymer particles, which is different from the first type of acrylic polymer particles and has a glass transition temperature of less than 80°C, such as less than 75 °C, or less than 70 °C, or less than 65 °C. The second type of acrylic polymer particles may have a glass transition temperature of 40 °C or more, such as 45 °C or more, or 50 °C or more, or 55 °C or more. A person skilled in the art will appreciate that any range between any of the explicitly disclosed lower and upper limit is herein disclosed. Typically, the glass transition temperature of the second type of acrylic polymer particles ranges from 40 to less than 80 °C, preferably from 40 to 75 °C, more preferably from 40 to 70 °C, even more preferably from 50 to 70 °C, most preferably from 50 to 65 °C. The glass transition temperature is determined by DSC as described above.

Alternatively or in addition, the powder composition can comprise a third type of acrylic polymer particles, which is different from the first type of acrylic polymer particles and has a glass transition temperature which is greater than the glass transition temperature of the first type of acrylic polymer particles, for example greater by 5 K or more, such as 10 K or more. The third type of acrylic polymer particles may have a glass transition temperature of 80 °C or more, such as 85 °C or more, or 90 °C or more, or 95 °C or more, or 100 °C or more, or 105 °C or more. The third type of acrylic polymer particles may have a glass transition temperature of equal to or less than 130 °C, such as equal to or less than 125 °C, or equal to or less than 120 °C, or equal to or less than 115 °C. A person skilled in the art will appreciate that any range between any of the explicitly disclosed lower and upper limit is herein disclosed. Typically, the glass transition temperature of the third type of acrylic polymer particles ranges from 90 to 130 °C, preferably from 100 to 130 °C, more preferably from 100 to 130 °C, even more preferably from 100 to 120 °C. The glass transition temperature of the third type of acrylic polymer particles may range from > 100 °C to 130 °C. The glass transition temperature is determined by DSC as described above.

In a preferred practice, the powder composition further comprises a second type of acrylic polymer particles, which is different from the first type of acrylic polymer particles and has a glass transition temperature of less than 80°C, such as in a range from 40°C to 70°C, and a third type of acrylic polymer particles, which is different from the first type of acrylic polymer particles and has a glass transition temperature of 80°C or more, such as in a range of from 90°C to 130°C. The second type of acrylic polymer particles and the third type of acrylic polymer particles are different from each other.

The second type of acrylic polymer particles may comprise a copolymer obtained by copolymerizing a monomer mixture comprising a plurality of different (meth)acrylate monomers. Suitable (meth)acrylate monomers may be selected from, alkyl (meth)acrylates, such as methyl (meth)acrylate, ethyl (meth)acrylate, propyl (meth)acrylate, butyl (meth)acrylate, hexyl (meth)acrylate, ethyl hexyl (meth)acrylate, iso-octyl (meth)acrylate, cyclohexyl (meth)acrylate, nonyl (meth)acrylate, decyl (meth)acrylate, dodecyl (meth)acrylate and combinations thereof; hydroxyalkyl (meth)acrylates; such as hydroxyethyl (meth)acrylate, hydroxypropyl (meth)acrylate, hydroxybutyl (meth)acrylate, and combinations thereof, preferably alkyl (meth)acrylates, such as methyl (meth)acrylate, ethyl (meth)acrylate, propyl (meth)acrylate, butyl (meth)acrylate, hexyl (meth)acrylate, ethyl hexyl (meth)acrylate, iso-octyl (meth)acrylate, cyclohexyl (meth)acrylate, nonyl (meth)acrylate, decyl (meth)acrylate, dodecyl (meth)acrylate and combinations thereof, more preferably methyl (meth)acrylate and combinations thereof, even more preferably methyl methacrylate. The monomer mixture may further comprise monomers being different from (meth)acrylate monomers, such as styrene, 1,3-butadiene, vinyl chloride, acrylonitrile, vinyl acetate and combinations thereof.

The second type of acrylic polymer particles may comprise a copolymer comprising at least 60 wt.%, such as at least 63 wt.%, or at least 65 wt.%, or at least 67 wt.%, or at least 70 wt.% of structural units derived from methyl methacrylate. The second type of acrylic polymer particles may comprise a copolymer comprising up to 90 wt.%, such as up to 87 wt.%, or up to 85 wt.%, or up to 83 wt.%, or up to 80 wt.% of structural units derived from methyl methacrylate. A person skilled in the art will appreciate that any range between any of the explicitly disclosed lower and upper limit is herein disclosed. The second type of acrylic polymer particles may comprise a copolymer comprising in a range of 60 to 90 wt.%, more preferably 60 to 85 wt.-% of structural units derived from methyl methacrylate.

The second type of acrylic polymer particles, preferably acrylic polymer particles, may comprise a copolymer comprising at least 2 wt.%, such as at least 5 wt.%, or at least 7 wt.%, or at least 10 wt.%, or at least 12 wt.% of structural units derived from methyl acrylate. The second type of acrylic polymer particles, preferably acrylic polymer particles, may comprise a copolymer comprising up to 50 wt.%, such as up to 47 wt.% or up to 45 wt.% or up to 43 wt.% or up to 40 wt.% of structural units derived from methyl acrylate. A person skilled in the art will appreciate that any range between any of the explicitly disclosed lower and upper limit is herein disclosed. The second type of acrylic polymer particles, preferably acrylic polymer particles, may comprise a copolymer comprising in a range of 2 to 50 wt.%, more preferably 5 to 45 wt.-% of structural units derived from methyl acrylate preferably.

The powder composition according to the present invention may comprise the second type of acrylic polymer particles in an amount of at least 1 wt.%, such as at least 1.5 wt.%, or at least 2 wt.%, or at least 2.5 wt.%, or at least 3 wt.%, or at least 3.5 wt.%, based on the total weight of the powder composition. The powder composition according to the present invention may comprise the second type of acrylic polymer particles in an amount of up to 15 wt.%, such as up to 12 wt.% or up to 10 wt.% or up to 8 wt.%, based on the total weight of the powder composition. A person skilled in the art will appreciate that any range between any of the explicitly disclosed lower and upper limit is herein disclosed. The powder composition may comprise the second type of acrylic polymer particles in an amount of from 0 to 15 wt.%, preferably from 1 to 15 wt.%, more preferably from 2 to 10 wt.%, even more preferably from 3 to 8 wt.%, based on the total weight of the powder composition.

The third type of acrylic polymer particles may comprise a copolymer obtained by copolymerizing a monomer mixture comprising a plurality of different (meth)acrylate monomers. The third type of acrylic polymer particles may comprise poly(alkyl methacrylate), preferably poly(methyl methacrylate). The third type of acrylic polymer particles can in particular comprise a copolymer comprising at least 60 wt.%, such as at least 63 wt.%, or at least 65 wt.%, or at least 67 wt.%, or at least 70 wt.% of structural units derived from methyl methacrylate. The third type of acrylic polymer particles may comprise a copolymer comprising up to 90 wt.%, such as up to 87 wt.%, or up to 85 wt.%, or up to 83 wt.%, or up to 80 wt.% of structural units derived from methyl methacrylate. A person skilled in the art will appreciate that any range between any of the explicitly disclosed lower and upper limit is herein disclosed. The third type of acrylic polymer particles may comprise a copolymer comprising in a range of 60 to 90 wt.%, more preferably 60 to 85 wt.-% of structural units derived from methyl methacrylate.

The powder composition according to the present invention may comprise the third type of acrylic polymer particles, preferably acrylic polymer particles, in an amount of at least 1 wt.%, such as at least 2 wt.%, or at least 5 wt.%, or at least 8 wt.%, or at least 10 wt.%, or at least 12 wt.%, based on the total weight of the powder composition. The powder composition according to the present invention may comprise the third type of acrylic polymer particles, preferably acrylic polymer particles, in an amount of up to 25 wt.%, such as up to 22 wt.%, or up to 20 wt.%, or up to 18 wt.%, based on the total weight of the powder composition. A person skilled in the art will appreciate that any range between any of the explicitly disclosed lower and upper limit is herein disclosed. The powder composition may comprise the third type of acrylic polymer particles, preferably acrylic polymer particles, in an amount of from 0 to 25 wt.%, preferably from 1 to 25 wt.%, more preferably from 5 to 20 wt.%, even more preferably from 10 to 20 wt.%, based on the total weight of the powder composition.

The powder composition may comprise from 1 to 15 wt.%, preferably from 1 to 12 wt.%, more preferably from 2 to 10 wt.%, even more preferably from 3 to 8 wt.% of the second type of acrylic polymer particles, preferably acrylic polymer particles, and from 1 to 25 wt.%, preferably from 1 to 22 wt.%, more preferably from 5 to 20 wt.%, even more preferably from 10 to 20 wt.% of the third type of acrylic polymer particles, preferably acrylic polymer particles, the weight percentages being based on the total weight of the powder composition.

The powder composition may comprise from 60 to 95 wt.%, preferably from 60 to 92 wt.%, more preferably from 60 to 90 wt.%, even more preferably from 65 to 85 wt.% of the first type of acrylic polymer particles; from 1 to 15 wt.%, preferably from 1 to 12 wt.%, more preferably from 2 to 10 wt.%, even more preferably from 3 to 8 wt.% of the second type of acrylic polymer particles; and from 1 to 25 wt.%, preferably from 1 to 22 wt.%, more preferably from 5 to 20 wt.%, even more preferably from 10 to 20 wt.% of the third type of acrylic polymer particles and, the weight percentages being based on the total weight of the powder composition. According to the present invention, the amounts of the first, second and third types of acrylic polymer particles may add up to 100 wt.%.

The one or more types of polymer particles used in the powder composition, such as the first type acrylic polymer particles, the second type of acrylic polymer particles and/or the third type of acrylic polymer particles, may each be characterized by their shape and/or particle sizes. As will be understood by a skilled artisan, a powder of a type of polymer particles will generally comprise a plurality of particles of the polymer having different sizes, that is a particle size distribution. The particle size distribution can be measured by dynamic light scattering (DLS). For the DLS measurement, a highly diluted dispersion of the polymer particles in water, such as a concentration in a range of 0.1 to 10 g/L, is used. The skilled person is aware that in this context the DLS is only sufficiently conclusive, if, agglomeration or swelling of the particles does not take place. Therefore, the particle distribution is measured several times to detect time dependent changes of the particle sizes. The one or more types of polymer particles used in the powder composition according to the present invention typically have a rather narrow particle size distribution with a span (Dv90-Dv10)/Dv50 in a range from 0.7 to 1.3, such as from 0.8 to 1.2 or from 0.9 to 1.1. The one or more types of polymer particles may each have a median particle size Dv50 in a range from 5 µm to 200 µm, such as from 10 to 100 µm, preferably from 20 to 80 µm or from 30 to 70 µm. The polymer particles preferably have a rounded and/or spherical shape as this promotes flowability and a formation of compact powder layers. Sphericity is a measure of the degree to which a particle approximates the shape of a sphere-like object, and is independent of its size. Roundness is the measure of the sharpness of a particle's edges and corners. The sphericity and roundness may be determined based on Wadell's definitions, i.e., Wadell's sphericity and roundness indices. The polymer particles may for example exhibit a sphericity in a range from 0.9 to 1.0.

The powder composition used in the material system according to the present invention typically comprises the polymer particles, which can comprise one or more types of polymer particles as set forth above, in a total amount of 60 wt.% or more, such as 70 wt.% or more, or 80 wt.% or more, or 85 wt.% or more, or 90 wt.% or more, or 95 wt.% or more, or 98 wt.% or more, or 99 wt.% or more, based on the total weight of the powder composition. The powder composition can comprise the polymer particles for example in a total amount of up to 100 wt.%, such as 100 wt.% or less, 99.9 wt.% or less, 99.5 wt.% or less, or 99 wt.% or less, or 98 wt.% or less, or 95 wt.% or less, or 90 wt.% or less, or 85 wt.% or less, or 80 wt.% or less, based on the total weight of the powder composition. The powder composition can for example comprise the polymer particles in a total amount in a range between any of the above-mentioned values, such as from 60 wt.% to 100%, or from 80 wt.% to 99.9 wt.%, or from 95 wt.% to 99.5 wt.%, based on the total weight of the powder composition.

The powder composition may optionally comprise further ingredients. For instance, it can include one or more other particulate materials in addition to the polymer particles. Non-limiting examples of such further particulate materials include metal particles, glass beads, ceramic, mineral or other particulate materials such as pigments or fillers like carbon black, clay, silica, silicates or metal oxides, or a mixture or combination thereof. These other particulate materials can be present in the powder composition in the form of separate particles in addition to the polymer particles. In addition or alternatively, they can be incorporated in at least a portion of the above-described polymer particles, e.g. as a filler encapsulated by or dispersed in the polymer particles. The optional further particulate materials, if used, may be present in the powder composition in an amount of 0.1 wt.% or more, such as 0.5 wt.% or more, or 1 wt.% or more, or 2 wt.% or more, or 5 wt.% or more, or 10 wt.% or more, based on the total weight of the powder composition. They can for example be used in an amount of 40 wt.% or less, such as 30 wt.% or less, or 20 wt.% or less, or 10 wt.% or less, or 5 wt.% or less, or 2 wt.% or less, or 1 wt.% or less, based on the total weight of the powder composition. The powder composition can for example comprise the optional further particulate materials, if used, in an amount in a range between any of the above-mentioned values, such as from 0.1 wt.% to 40%, or from 1 wt.% to 20 wt.%, or from 2 wt.% to 10 wt.%, based on the total weight of the powder composition.

Furthermore, in a preferred practice, auxiliary ingredients for effecting a polymerization of the material polymerizable by free radical polymerization contained by the liquid binder may be distributed among the powder composition and the liquid binder such that free radical generation and polymerization starts essentially only when the powder composition and the liquid binder, are brought into contact, e.g. by printing. For example, the powder composition may comprise an initiator and the liquid binder comprises a catalyst or accelerator for a free radical polymerization reaction. In another example, the powder composition comprises a catalyst or accelerator and the liquid binder comprises an initiator. The material system can thus be stable upon storage for extended periods of time.

Accordingly, the powder composition can comprise one or more auxiliary ingredient(s) for effecting a free radical polymerization, such as an initiator or a catalyst or accelerator. Initiators that can be used according to the present invention include any substances commonly used for initiating free radical polymerizations. This includes for instance organic peroxides, such as aromatic peroxides like dibenzoyl peroxide, ketone peroxides such as methylethylketone peroxide or acetylacetone peroxide, hydroperoxides, persulphates, percarbonates, or azo initiators such as azobisisobutyronitrile (AIBN). According to the present invention preferably an aromatic peroxide such as dibenzoyl peroxide is used as initiator. A catalyst or accelerator can be used to accelerate the polymerization reaction, e.g. to proceed with notable rate at a relatively low reaction temperature such as under ambient conditions. As used herein, the term "ambient conditions" refers to room temperature, such as temperatures in the range of 18 to 25°C, and atmospheric pressure. Any catalyst or accelerator known in the art for catalyzing or accelerating free radical polymerization reactions can be used. Suitable examples of catalysts or accelerators comprise for instance amines such as tertiary amines like dimethyl-p-toluidine, dihydroxyethyl-p-toluidine or 4-dimethylamino phenethyl alcohol; transition metal catalyst such as cobalt (II) octoate, cobalt (II) naphthenate, vanadium (II) octoate or manganese naphthenate. Preferably, the accelerator comprises tertiary amines, more preferably dimethyl-p-toluidine, dihydroxyethyl-p-toluidine or 4-dimethylamino phenethyl alcohol.

In a preferred practice, the powder composition comprises an initiator, such as any of the initiators indicated above. In such case, it may be further preferred that the powder composition does not comprise a catalyst or accelerator to not impair storage stability. The one or more auxiliary ingredient(s) for effecting a free radical polymerization, such as an initiator, catalyst or accelerator will be used in an amount that is effective for the intended purpose. The powder composition may for instance comprise the initiator, catalyst or accelerator in an amount of 0.001 wt.% or more, such as 0.01 wt.% or more, or 0.05 wt.% or more, or 0.1 wt.% or more, or 0.2 wt.% or more, or 0.5 wt.% or more, based on the total weight of the powder composition. The powder composition may for instance comprise the initiator, catalyst or accelerator in an amount of 5 wt.% or less, such as 2 wt.% or less, or 1 wt.% or less, or 0.5 wt.% or less, or 0.3 wt.% or less, or 0.2 wt.% or less, or 0.1 wt.% or less, based on the total weight of the powder composition. The powder composition can for example comprise the initiator, catalyst or accelerator in an amount in a range between any of the above-mentioned values, such as from 0.001 wt.% to 5 wt.%, or from 0.01 wt.% to 1 wt.%, or from 0.05 wt.% to 0.5 wt.%, based on the total weight of the powder composition.

The one or more auxiliary ingredient(s) for effecting a free radical polymerization, such as an initiator or catalyst or accelerator, can be present in the powder composition as distinct components. In a preferred practice, they may however be incorporated in at least a portion of the above-described polymer particles. The above-described polymer particles can accordingly contain the auxiliary ingredient(s) for effecting a free radical polymerization, which can for example be dispersed, dissolved and/or encapsulated in the polymer particles, preferably acrylic polymer particles. For example, polymerization can be carried out with a more active initiator, such as bis(tert-butylcyclohexyl) peroxydicarbonate (BCHPC), in the presence of a less active initiator, such as dibenzoyl peroxide, at low temperatures, e.g., temperatures in the range of 40 to 60°C, leaving the less active initiator intact and incorporated into the polymer particles. Alternatively, the initiator may be present at a surface of the polymer particles, preferably acrylic polymer particles. Accordingly, the initiator can for example be applied as a coating thereto. This can be achieved in particular by adding the respective initiator only at the end of the polymerization to be present at the surface of the polymer particles. Additionally, it is possible to coat the initiator catalyst and/or accelerator onto the surface of the polymer particles after polymerization via spray drying techniques.

As set forth above, different types of polymer particles can be used, which may differ in their chemical composition and/or physical properties such as the glass transition temperature. The difference in chemical composition can also relate to the presence or absence, distribution or amount of the auxiliary ingredient(s) in the types of polymer particles. For instance, the above-described second type of acrylic polymer particles and/or third type of acrylic polymer particles may each individually comprise an initiator, catalyst or accelerator for a free radical polymerization reaction, preferably an initiator. The above-described first type of acrylic polymer particles may on the other hand be substantially free, or completely free, from an initiator, catalyst or accelerator. "Substantially free" as used herein means that the recited elements are not deliberately added in the preparation of the polymer particles, but may be nevertheless present in trace amounts, such as up to 10 ppm, due to contamination. "Completely free" as used herein means that the recited elements are not present (in a measurable amount) in the polymer particles.

The second type of acrylic polymer particles may comprise an initiator, catalyst or accelerator, in an amount of 0.001 wt.% or more, such as 0.01 wt.% or more, or 0.05 wt.% or more, or 0.1 wt.% or more, or 0.2 wt.% or more, or 0.5 wt.% or more, based on the total weight of the second type of acrylic polymer particles. The second type of acrylic polymer particles may comprise an initiator, catalyst or accelerator in an amount of 5 wt.% or less, such as 2 wt.% or less, or 1 wt.% or less, or 0.5 wt.% or less, or 0.3 wt.% or less, or 0.2 wt.% or less, or 0.1 wt.% or less, based on the total weight of the second type of acrylic polymer particles. The second type of acrylic polymer particles can for example comprise an initiator, catalyst or accelerator in a range between any of the above-mentioned values, such as from 0.001 wt.% to 5 wt.%, or from 0.01 wt.% to 1 wt.%, or from 0.05 wt.% to 0.5 wt.%, based on the total weight of the second type of acrylic polymer particles. The third type of acrylic polymer particles may comprise an initiator, catalyst or accelerator in an amount of 0.001 wt.% or more, such as 0.01 wt.% or more, or 0.05 wt.% or more, or 0.1 wt.% or more, or 0.2 wt.% or more, or 0.5 wt.% or more, based on the total weight of the third type of acrylic polymer particles. The third type of acrylic polymer particles may comprise an initiator, catalyst or accelerator in an amount of 5 wt.% or less, such as 2 wt.% or less, or 1 wt.% or less, or 0.5 wt.% or less, or 0.3 wt.% or less, or 0.2 wt.% or less, or 0.1 wt.% or less, based on the total weight of the third type of acrylic polymer particles. The third type of acrylic polymer particles can for example comprise an initiator, catalyst or accelerator in an amount in a range between any of the above-mentioned values, such as from 0.001 wt.% to 5 wt.%, or from 0.01 wt.% to 1 wt.%, or from 0.05 wt.% to 0.5 wt.%, based on the total weight of the third type of acrylic polymer particles.

The second type of acrylic polymer particles and/or the third type of acrylic polymer particles may comprise an initiator, such as any of the initiators indicated above. In such a case, the second type of acrylic polymer particles and/or the third type of acrylic polymer particles do(es) not comprise a catalyst or accelerator to not impart storage stability.

The second type of acrylic polymer particles may comprise the initiator, in an amount of 0.001 wt.% or more, such as 0.01 wt.% or more, or 0.05 wt.% or more, or 0.1 wt.% or more, or 0.2 wt.% or more, or 0.5 wt.% or more, based on the total weight of the second type of acrylic polymer particles. The second type of acrylic polymer particles may comprise the initiator in an amount of 5 wt.% or less, such as 2 wt.% or less, or 1 wt.% or less, or 0.5 wt.% or less, or 0.3 wt.% or less, or 0.2 wt.% or less, or 0.1 wt.% or less, based on the total weight of the second type of acrylic polymer particles. The second type of acrylic polymer particles can for example comprise the initiator in a range between any of the above-mentioned values, such as from 0.001 wt.% to 5 wt.%, or from 0.01 wt.% to 1 wt.%, or from 0.05 wt.% to 0.5 wt.%, based on the total weight of the second type of acrylic polymer particles. The third type of acrylic polymer particles may comprise the initiator in an amount of 0.001 wt.% or more, such as 0.01 wt.% or more, or 0.05 wt.% or more, or 0.1 wt.% or more, or 0.2 wt.% or more, or 0.5 wt.% or more, based on the total weight of the third type of acrylic polymer particles. The third type of acrylic polymer particles may comprise the initiator in an amount of 5 wt.% or less, such as 2 wt.% or less, or 1 wt.% or less, or 0.5 wt.% or less, or 0.3 wt.% or less, or 0.2 wt.% or less, or 0.1 wt.% or less, based on the total weight of the third type of acrylic polymer particles. The third type of acrylic polymer particles can for example comprise the initiator in an amount in a range between any of the above-mentioned values, such as from 0.001 wt.% to 5 wt.%, or from 0.01 wt.% to 1 wt.%, or from 0.05 wt.% to 0.5 wt.%, based on the total weight of the third type of acrylic polymer particles.

Both the second type of acrylic polymer particles and the third type of acrylic polymer particles may comprise an initiator, such as any of the initiators indicated above. In such case, it may be preferred that both the second type of acrylic polymer particles and the third type of acrylic polymer particles do not comprise a catalyst or accelerator to not impair storage stability.

Alternatively, the second type of acrylic polymer particles and/or the third type of acrylic polymer particles may comprise a catalyst or accelerator, such as any of the catalysts or accelerators indicated above. In such a case, the second type of acrylic polymer particles and/or the third type of acrylic polymer particles do(es) not comprise an initiator to not impart storage stability.

The second type of acrylic polymer particles may comprise the catalyst or accelerator, in an amount of 0.001 wt.% or more, such as 0.01 wt.% or more, or 0.05 wt.% or more, or 0.1 wt.% or more, or 0.2 wt.% or more, or 0.5 wt.% or more, based on the total weight of the second type of acrylic polymer particles. The second type of acrylic polymer particles may comprise the catalyst or accelerator in an amount of 5 wt.% or less, such as 2 wt.% or less, or 1 wt.% or less, or 0.5 wt.% or less, or 0.3 wt.% or less, or 0.2 wt.% or less, or 0.1 wt.% or less, based on the total weight of the second type of acrylic polymer particles. The second type of acrylic polymer particles can for example comprise the catalyst or accelerator in a range between any of the above-mentioned values, such as from 0.001 wt.% to 5 wt.%, or from 0.01 wt.% to 1 wt.%, or from 0.05 wt.% to 0.5 wt.%, based on the total weight of the second type of acrylic polymer particles. The third type of acrylic polymer particles may comprise the catalyst or accelerator in an amount of 0.001 wt.% or more, such as 0.01 wt.% or more, or 0.05 wt.% or more, or 0.1 wt.% or more, or 0.2 wt.% or more, or 0.5 wt.% or more, based on the total weight of the third type of acrylic polymer particles. The third type of acrylic polymer particles may comprise the catalyst or accelerator in an amount of 5 wt.% or less, such as 2 wt.% or less, or 1 wt.% or less, or 0.5 wt.% or less, or 0.3 wt.% or less, or 0.2 wt.% or less, or 0.1 wt.% or less, based on the total weight of the third type of acrylic polymer particles. The third type of acrylic polymer particles can for example comprise the catalyst or accelerator in an amount in a range between any of the above-mentioned values, such as from 0.001 wt.% to 5 wt.%, or from 0.01 wt.% to 1 wt.%, or from 0.05 wt.% to 0.5 wt.%, based on the total weight of the third type of acrylic polymer particles.

The powder composition may optionally contain one or more further additive(s) that may be used in the art of powder technology. For example, the powder composition used in the material system of the present invention can comprise one or more flow or anti-caking agent to adjust the rheological properties and/or avoid a formation of lumps. Illustrative examples of flow or anti-caking agents that can be used in the practice of the present invention include for instance stearates, e.g. of zinc, aluminum, calcium or magnesium, silica (e.g. pyrogenic silica), silicates, aluminosilicates, fluoroplastics or talc. The powder composition can comprise the flow or anti-caking agent(s), if used, in any effective amount, typically the flow or anti-caking agent(s) may be used in an amount of 0.01 wt.% or more, such as 0.02 wt.% or more, or 0.05 wt.% or more, or 0.1 wt.% or more, based on the total weight of the powder composition. The flow or anti-caking agent(s) may for example be used in an amount of 1 wt.% or less, such as 0.5 wt.% or less, or 0.2 wt.% or less, based on the total weight of the powder composition. The powder composition can for example comprise flow or anti-caking agent(s) in an amount in a range between any of the above-mentioned values, such as from 0.01 wt.% to 1%, or from 0.05 wt.% to 0.5 wt.%, or from 0.1 wt.% to 0.2 wt.%, based on the total weight of the powder composition.

The powder composition of the material system according to the present invention can be prepared using common powder formulation techniques and equipment. The one or more type(s) of polymer particles and any additional optional ingredients to be used, such as those described above, may accordingly be combined in the desired relative amounts and mixed until a homogenous powder is obtained.

The powder composition used according to the present invention is advantageously easily flowable such that it can be applied in compact powder layers, e.g. by a mechanical applicator of a 3D printer. The powder composition may have a bulk density of 500 g/L or more, such as 600 g/L or more, or 650 g/L or more. It may for example have a bulk density of 800 g/L or less, such as 750 g/L or less, or 720 g/L or less. The powder composition can for example have a bulk density in a range between any of the above-mentioned values, such as from 500 g/L to 800 g/L, or from 600 to 750 g/L, or from 650 to 720 g/L. The bulk density may be determined according to DIN EN ISO 60:1999.

According to the present invention, the material system comprises a liquid binder comprising a material polymerizable by free radical polymerization. The term "liquid binder" as used herein refers to a composition in the form of a solution or dispersion, i.e., a homogeneous or heterogeneous liquid phase that is free-flowing and can be applied by a printhead of a 3D printer.

The liquid binder according to the present invention comprises one or more than one volatile ethylenically unsaturated monomer(s) having a vapor pressure in a range of from 5 to 500 hPa, such as from 10 to 100 hPa or from 10 to 30 hPa, at a temperature of 20 °C. The vapor pressure may be determined according to OECD experimental guideline TG 104, particularly by static method. The one or more than one volatile ethylenically unsaturated monomer having a vapor pressure in a range of from 5 to 500 hPa may be selected from the group consisting of methyl acrylate, methyl methacrylate, ethyl acrylate, ethyl methacrylate, propyl acrylate, propyl methacrylate, n-butyl acrylate, i-butyl acrylate, styrene, ethyl vinyl ether, divinyl ether, n-propyl vinyl ether, n-butyl vinyl ether, i-butyl vinyl ether and combinations thereof. The liquid binder comprises the one or more than one volatile ethylenically unsaturated monomer having a vapor pressure in a range of from 5 to 500 hPa in an amount in a range of from 1 wt.% to 20 wt.%, such as from 1 wt.% to 18 wt.%, or from 1.5 wt.% to 15 wt.%, or from 2 wt.% to 12 wt.%, or from 2 wt.% to 10 wt.%, or from 2.5 wt.% to 8 wt.%, or from 3 wt.% to 7 wt.%, based on the total weight of the liquid binder.

The polymerizable material according to the present invention may comprise in addition to the one or more than one volatile ethylenically unsaturated monomer(s) one or more than one type of mono-ethylenically unsaturated monomers. Non-limiting examples of mono-ethylenically unsaturated monomers include (meth)acrylate monomers, vinyl carbonate monomers, O-vinyl carbamate monomers, N-vinyl carbamate monomers, and (meth)acrylamide monomers. Preferably, the at least one type of mono-ethylenically unsaturated monomers may be selected from (meth)acrylate monomers.

Suitable (meth)acrylate monomers may be selected from, but are not limited to, alkyl (meth)acrylate such as methyl (meth)acrylate, ethyl (meth)acrylate, propyl (meth)acrylate, butyl (meth)acrylate, hexyl (meth)acrylate, ethyl hexyl (meth)acrylate, iso-octyl (meth)acrylate, nonyl (meth)acrylate, decyl (meth)acrylate, and dodecyl (meth)acrylate; and hydroxyalkyl (meth)acrylate, such as hydroxyethyl (meth)acrylate, hydroxypropyl (meth)acrylate, and hydroxybutyl (meth)acrylate.

The material polymerizable by free radical polymerization according to the present invention may comprise one or more than one alkyl (meth)acrylate, preferably selected from methyl (meth)acrylate, ethyl (meth)acrylate, propyl (meth)acrylate, butyl (meth)acrylate, hexyl (meth)acrylate, ethyl hexyl (meth)acrylate, iso-octyl (meth)acrylate, nonyl (meth)acrylate, decyl (meth)acrylate, dodecyl (meth)acrylate, and combinations thereof. The material polymerizable by free radical polymerization may comprise the one or more than one alkyl (meth)acrylate in an amount of 1 wt.% or more, such as 2 wt.% or more, or 2.5 wt.% or more, or 3 wt.% or more, based on the total weight of the liquid binder. The material polymerizable by free radical polymerization may comprise the one or more than one alkyl (meth)acrylate in an amount of 20 wt.% or less, such as 15 wt.% or less, or 10 wt.% or less, or 7 wt.% or less, based on the total weight of the liquid binder. The material polymerizable by free radical polymerization can for example comprise the one or more than one alkyl (meth)acrylate in an amount in a range between any of the above-mentioned values, such as from 1 wt.% to 20 wt.%, or from 2 wt.% to 10 wt.%, or from 3 wt.% to 7 wt.%, based on the total weight of the liquid binder.

The material polymerizable by free radical polymerization according to the present invention may comprise one or more than one hydroxyalkyl (meth)acrylate, preferably selected from hydroxyethyl (meth)acrylate, hydroxypropyl (meth)acrylate, hydroxybutyl (meth)acrylate, and combinations thereof, more preferably hydroxyethyl (meth)acrylate, hydroxypropyl (meth)acrylate, and combinations thereof. The material polymerizable by free radical polymerization may comprise the one or more than one hydroxyalkyl (meth)acrylate in an amount of 50 wt.% or more, such as 55 wt.% or more, or 60 wt.% or more, or 65 wt.% or more, based on the total weight of the liquid binder. The material polymerizable by free radical polymerization may comprise the one or more than one hydroxyalkyl (meth)acrylate in an amount of 99 wt.% or less, such as 95 wt.% or less, or 93 wt.% or less, or 90 wt.% or less, based on the total weight of the liquid binder. The material polymerizable by free radical polymerization can for example comprise the one or more than one hydroxyalkyl (meth)acrylate in an amount in a range between any of the above-mentioned values, such as from 50 wt.% to 99 wt.%, or from 55 wt.% to 95 wt.%, or from 60 wt.% to 90 wt.%, based on the total weight of the liquid binder.

The material polymerizable by free radical polymerization may optionally further comprise in addition to the one or more than one volatile ethylenically unsaturated monomer(s) optionally one or more than one crosslinker. As used herein, the term "crosslinker" refers to a monomer, oligomer or polymer that has functional groups capable of forming covalent bonds (crosslinks), either with itself or with functional groups of other crosslinkable compounds. The crosslinker may comprise a compound with two or more ethylenically unsaturated moieties, such as (meth)acrylate and/or allyl moieties, per molecule. Suitable compounds with two or more ethylenically unsaturated moieties may be selected from, but not limited to, divinyl benzene, trivinyl benzene, divinyl ethers, such as 1,4-butanediol divinyl ether, di(ethylene glycol)divinyl ether, tri(ethylene glycol) divinyl ether, 1,4-cyclohexanedimethanol divinyl ether; glyoxal bis(diallyl acetal); bi- or higher functional (meth)acrylates and combinations thereof. Suitable bi-functional (meth)acrylates may include ethylene glycol di(meth)acrylate, hexanediol di(meth)acrylate, tripropylene glycol di(meth)acrylate, butanediol di(meth)acrylate, triethylene glycol di(meth)acrylate, and dipropylene glycol di(meth)acrylate, preferably ethylene glycol di(meth)acrylate. Suitable higher functional (meth)acrylates may include trimethylolpropane tri(meth)acrylate, pentaerythritol tetraacrylate, di(trimethylolpropane)tetraacrylate, and dipentaerythritol penta-/hexa-acrylate.

The material polymerizable by free radical polymerization according to the present invention may comprise one or more than one bi- or higher functional (meth)acrylates, preferably bi-functional (meth)acrylates. The bi-functional (meth)acrylates may be selected from ethylene glycol di(meth)acrylate, hexanediol di(meth)acrylate, tripropylene glycol di(meth)acrylate, butanediol di(meth)acrylate, triethylene glycol di(meth)acrylate, dipropylene glycol di(meth)acrylate, and combinations thereof, preferably ethylene glycol di(meth)acrylate. The material polymerizable by free radical polymerization may comprise the one or more than one bi- or higher functional (meth)acrylates, preferably bi-functional (meth)acrylates, in an amount of 0.5 wt.% or more, such as 1 wt.% or more, or 1.5 wt.% or more, or 2 wt.% or more, based on the total weight of the liquid binder. The material polymerizable by free radical polymerization may comprise the one or more than one bi- or higher functional (meth)acrylates, preferably bi- functional (meth)acrylates, in an amount of 6 wt.% or less, such as 5 wt.% or less, or 4.5 wt.% or less, or 4 wt.% or less, based on the total weight of the liquid binder. The material polymerizable by free radical polymerization can for example comprise the one or more than one bi- or higher functional (meth)acrylates, preferably bi-functional (meth)acrylates, in an amount in a range between any of the above-mentioned values, such as from 0.5 wt.% to 5 wt.%, or from 1 wt.% to 5 wt.%, or from 1.5 wt.% to 4 wt.%, based on the total weight of the liquid binder.

In a preferred practice, the material polymerizable by free radical polymerization comprises one or more than one hydroxyalkyl(meth)acrylate monomer and one or more than one bi- or higher functional (meth)acrylate. The material polymerizable by free radical polymerization may comprise one or more than one hydroxyalkyl (meth)acrylate monomer in an amount of from 50 wt.% to 99 wt.%, and one or more than one bi- or higher functional (meth)acrylate in an amount of from 1 wt.% to 5 wt.%, the weight percentages being based on the total weight of the liquid binder.

According to the present invention, the material polymerizable by free radical polymerization may comprise one or more than one (meth)acrylate monomer(s) that individually yield(s) a homopolymer having a glass transition temperature below 0°C, such as below - 40°C. The material polymerizable by free radical polymerization may comprise one or more than one (meth)acrylate monomer(s) that individually yield(s) a homopolymer having a glass transition temperature of - 120°C or more, such as - 100°C or more or - 80°C or more. The material polymerizable by free radical polymerization according to the present invention may comprise one or more than one (meth)acrylate monomer(s) that individually yield(s) a homopolymer having a glass transition temperature in a range of from 30°C to - 120°C, such as from 0°C to - 100°C or from - 20°C to - 80°C. The glass transition temperatures may be determined by dynamic mechanical analysis (DMA). Accordingly, the glass transition temperature may be measured on a dynamic mechanical analyzer of type DMA 1 manufactured by Mettler Toledo LLC (USA) with a peak force of 10 N and a minimal force of 0.001 N. The glass transition temperature is measured in a temperature range of from - 100°C to 100°C with a gradient of 5 K/min. The specimen is deflected at a frequency of 1 Hz and an amplitude of 50 µm..

Suitable (meth)acrylate monomer(s) that individually yield(s) a homopolymer having a glass transition temperature below 0°C, such as below - 40°C may be selected from, but is not limited to, ethyl acrylate, n-propyl acrylate, iso-propyl acrylate, n-butyl acrylate, iso-butyl acrylate, sec-butyl acrylate, 2-ethylhexyl acrylate, hexyl acrylate, nonyl acrylate, dodecyl acrylate, hydroxybutyl acrylate, hexyl methacrylate, octyl methacrylate, decyl methacrylate, isodecyl methacrylate, and dodecyl methacrylate, preferably hydroxybutyl acrylate.

The material polymerizable by free radical polymerization may comprise the one or more than one (meth)acrylate monomer(s) that individually yield(s) a homopolymer having a glass transition temperature below 0°C, such as below - 40°C, in an amount of 50 wt.% or more, such as 53 wt.% or more, or 55 wt.% or more, or 58 wt.% or more, based on the total weight of the liquid binder. The material polymerizable by free radical polymerization may comprise the one or more than one (meth)acrylate monomer(s) that individually yield(s) a homopolymer having a glass transition temperature below 0°C, such as below - 40°C, in an amount of 90 wt.% or less, such as 88 wt.% or less, or 85 wt.% or less, or 80 wt.% or less, based on the total weight of the liquid binder. The material polymerizable by free radical polymerization can for example comprise the one or more than one (meth)acrylate monomer(s) that individually yield(s) a homopolymer having a glass transition temperature below 0°C, such as below - 40°C, in an amount in a range between any of the above-mentioned values, such as from 50 wt.% to 90 wt.%, or from 50 wt.% to 88 wt.%, or from 55 wt.% to 80 wt.%, based on the total weight of the liquid binder.

The liquid binder may comprise one or more auxiliary ingredient(s) for effecting a free radical polymerization, such as an initiator, catalyst or accelerator. The one or more auxiliary ingredient(s) for effecting a free radical polymerization, such as an initiator, catalyst or accelerator will be used in an amount that is effective for the intended purpose. The liquid binder may for instance comprise the initiator, catalyst or accelerator in an amount of 0.001 wt.% or more, such as 0.01 wt.% or more, or 0.05 wt.% or more, or 0.1 wt.% or more, or 0.2 wt.% or more, or 0.5 wt.% or more, based on the total weight of the liquid binder. The liquid binder may for instance comprise the initiator, catalyst or accelerator in an amount of 5 wt.% or less, such as 2 wt.% or less, or 1 wt.% or less, or 0.5 wt.% or less, or 0.3 wt.% or less, or 0.2 wt.% or less, or 0.1 wt.% or less, based on the total weight of the liquid binder. The liquid binder can for example comprise the initiator, catalyst or accelerator in an amount in a range between any of the above-mentioned values, such as from 0.001 wt.% to 5 wt.%, or from 0.01 wt.% to 1 wt.%, or from 0.05 wt.% to 0.5 wt.%, based on the total weight of the liquid binder.

In a preferred practice, the liquid binder comprises a catalyst or accelerator, such as any of the catalysts or accelerators indicated above. In such case, it may be further preferred that the liquid binder does not comprise an initiator to not impair storage stability.

The liquid binder may comprise the catalyst or accelerator, in an amount of 0.001 wt.% or more, such as 0.01 wt.% or more, or 0.05 wt.% or more, or 0.1 wt.% or more, or 0.2 wt.% or more, or 0.5 wt.% or more, based on the total weight of the liquid binder. The liquid binder may comprise the catalyst or accelerator in an amount of 5 wt.% or less, such as 2 wt.% or less, or 1 wt.% or less, or 0.5 wt.% or less, or 0.3 wt.% or less, or 0.2 wt.% or less, or 0.1 wt.% or less, based on the total weight of the liquid binder. The liquid binder can for example comprise the catalyst or accelerator in a range between any of the above-mentioned values, such as from 0.001 wt.% to 5 wt.%, or from 0.01 wt.% to 1 wt.%, or from 0.05 wt.% to 0.5 wt.%, based on the total weight of the liquid binder.

Alternatively, the liquid binder comprises an initiator, such as any of the initiators indicated above. In such case, it may be further preferred that the liquid binder does not comprise a catalyst or accelerator to not impair storage stability.

The liquid binder may comprise the initiator, in an amount of 0.001 wt.% or more, such as 0.01 wt.% or more, or 0.05 wt.% or more, or 0.1 wt.% or more, or 0.2 wt.% or more, or 0.5 wt.% or more, based on the total weight of the liquid binder. The liquid binder may comprise the initiator in an amount of 5 wt.% or less, such as 2 wt.% or less, or 1 wt.% or less, or 0.5 wt.% or less, or 0.3 wt.% or less, or 0.2 wt.% or less, or 0.1 wt.% or less, based on the total weight of the liquid binder. The liquid binder can for example comprise the initiator in a range between any of the above-mentioned values, such as from 0.001 wt.% to 5 wt.%, or from 0.01 wt.% to 1 wt.%, or from 0.05 wt.% to 0.5 wt.%, based on the total weight of the liquid binder.

The material system according to the present invention may comprise the powder composition comprising an initiator in an amount in a range of from 0.001 wt.% to 5 wt.%, preferably from 0.01 wt.% to 1 wt.%, based on the total weight of the powder composition, and the liquid binder comprising a catalyst or accelerator in an amount in a range of from 0.001 wt.% to 5 wt.%, preferably from 0.01 wt.% to 1 wt.%, based on the total weight of the liquid binder. Alternatively, the material system according to the present invention may comprise the powder composition comprising a catalyst or accelerator in an amount in a range of from 0.001 wt.% to 5 wt.%, preferably from 0.01 wt.% to 1 wt.%, based on the total weight of the powder composition, and the liquid binder comprising an initiator in an amount in a range of from 0.001 wt.% to 5 wt.%, preferably from 0.01 wt.% to 1 wt.%, based on the total weight of the liquid binder

Radical polymerization in the material system of the present invention may be inhibited by oxygen, which is particularly present at interfaces and voids in the powder bed, locally limiting conversion of the polymerizable material. This may adversely affect achievable strength of the part formed and give rise to undesirable gradients in material properties between regions of high degree of conversion of the polymerizable material to regions of lower degree of conversion of the polymerizable material. The liquid binder according to the present invention may further comprises an oxygen scavenger.

Suitable oxygen scavengers may include trivalent phosphorus compounds; alkylamines, such as N-methyl diethanolamine (MDBA), or 1,4-diazabicyclo[2.2.2]octane (DABCO); thiols, such as trimethylolpropane tris(3-mercaptopropionate) (TMPMP); or pentaerythritol tetrakis(3-mercaptopropionate) (PETMP); hydrogenphosphites; silanes, such as tris(trimethylsilyl)silane (TTMSS); tin hydrides, such as tributyltin hydride; N-vinyl amides; sulfites, such as ethylene sulfite; singlet oxygen scavengers, such as 2,5-diphenylfuran (DPF), camphorquinones, 9,10-dibutyl anthracene (DBA); and combinations thereof. Preferably, the oxygen scavenger may comprise a trivalent phosphorus compound. The trivalent phosphorus compound may comprise a phosphine, a phosphite or a combination or a mixture thereof.

According to the present invention, the phosphine may comprise a trialkylphosphine and/or a triarylphosphine. The phosphite may comprises a trialkylphosphite and/or a triarylphosphite. In a preferred practice, the trivalent phosphorous compound may comprise triphenylphosphine, triethyl phosphine, triphenylphosphite, triethylphosphite, or a mixture or combination thereof.

The liquid binder may comprise the oxygen scavenger, preferably the trivalent phosphorous compound, in an amount of 0.001 wt.% or more, such as 0.01 wt.% or more, or 0.05 wt.% or more, based on the total weight of the liquid binder. The liquid binder may comprise the oxygen scavenger, preferably the trivalent phosphorous compound, in an amount of 10 wt.% or less, such as 5 wt.% or less, or 1 wt.% or less or 0.5 wt.% or less, or 0.2 wt.% or less, based on the total weight of the liquid binder. The liquid binder may comprise the oxygen scavenger, preferably the trivalent phosphorous compound, in an amount of from 0.001 to 10 wt.%, preferably from 0.01 to 1 wt.%, more preferably from 0.05 to 0.2 wt.%, based on the total weight of the liquid binder.

According to the present invention, the liquid binder may further comprise one or more than one additive selected from solvents, fillers, rheology modifying agents like viscosity modifiers, shrinkage minimizing agents, retardants, pH modifying agents, stabilizing agents, biocides, surfactants, humectants, wetting agents and colorants.

A solvent can prevent clogging of printheads. Additionally, the solvent may fuse the powder particles by means of cold welding. Suitable solvents may include water and/or organic solvents, preferably organic solvents. Organic solvents may be selected from alcohols, such as methanol, ethanol, propanol, butanol, tert-amyl alcohol, benzyl alcohol, ethylene glycol, glycerol, and neopentyl alcohol; esters, such as dimethyl succinate, ethyl acetate, butyl acetate and isopropyl acetate; ketones, such as acetone, butanone, cyclopentanone, ethyl isopropyl ketone, methyl isopropyl ketone, methyl isobutyl ketone; and combinations thereof, preferably esters, such as dimethyl succinate, ethyl acetate, butyl acetate and isopropyl acetate, preferably dimethyl succinate.

The liquid binder according to the present invention may comprise an organic solvent, preferably an ester, in an amount of 1 wt.-% or more, such as 2 wt.% or more, or 5 wt.% or more, or 7 wt.% or more, based on the total weight of the liquid binder. The liquid binder may comprise an organic solvent, preferably an ester, in an amount of 30 wt.-% or less, such as 25 wt.% or less, or 20 wt.% or less, or 15 wt.% or less, based on the total weight of the liquid binder. The liquid binder may comprise an organic solvent, preferably an ester, in an amount in a range between any of the above-mentioned values, such as from 1 to 30 wt.%, more preferably from 5 to 15 wt.%, based on the total weight of the liquid binder.

The binding effect of the solvent may result from the particles of the powder composition in the printed areas being dissolved and bonded together. When the solvent escapes, the contact surfaces of the particles may be bonded and a solid area may be formed. In some cases, material reduction can be observed. Since curing and shrinkage may correlate with the degree of dilution of the solvent, uniform curing can be achieved by slowing the evaporation rate, thereby reducing deformation. Additionally or alternatively, shrinking minimizing agents may be used. Suitable shrinking minimizing agents may include 2,5-dimethylpropanediol and/or pentaerythriol.

Pigments and colorants can be used to impart a desired color to the finished article. Suitable pigments may include zinc oxide, zinc sulfide, barium sulfate, titanium dioxide, zirconium silicate, lead carbonate, hollow borosilicate glass spheres and combinations thereof. Fillers may provide dimensional stability and adhesion for strength of the final article. Suitable fillers may include glass spheres, flakes or fibers; inorganic mineral fillers, such as wollastonite or mica; clay fillers, such as kaolin; starches, such as maltodextrin; plaster; polymeric fibers, such as cellulose fiber; ceramic fiber; graphite fiber; limestone; gypsum; aluminum oxide; aluminum silicate; potassium aluminum silicate; calcium silicate; calcium hydroxide; calcium aluminum; sodium silicate; metals; metal oxides, such as zinc oxide, titanium dioxide and magnetite; carbides, such as silicone carbide; borides, such as titanium diboride; and combinations thereof.

The liquid binder may have a viscosity of 1 mPas or more, such as 1.5 mPas or more, or 2 mPas or more, or 2.5 mPas or more. The liquid binder may have a viscosity of 50 mPas or less, such as 47 mPas or less, or 45 mPas or less, or 43 mPas or less. The liquid binder of the present invention may have a viscosity in a range from 1 to 50 mPas, such as 1 to 47 mPas, or 1.5 to 45 mPas. The viscosity may be measured with a rheometer as described in more detail below for the examples. The liquid binder may have a surface tension of 20 mN/m or more, such as 22 mN/m or more, or 25 mN/m or more, or 27 mN/m or more, or 30 mN/m or more. The liquid binder may have a surface tension of 50 mN/m or less, such as 47 mN/m or less, or 45 mN/m or less, or 43 mN/ or less, or 40 mN/m or less. The surface tension may be measured with a tensiometer as described in more detail below for the examples. The liquid binder can for example have a surface tension in a range between any of the above-mentioned values, such as from 20 to 50 mN/m, or 22 to 47 mN/m, or 25 to 45 mN/m. Liquid binders having a viscosity and/or a surface tension in the above-described ranges may help prevent undesirable flooding of lower layers of the powder bed by the liquid binder.

The liquid binder may be used in an amount of 15 wt.% or more, such as 18 wt.% or more, or 20 wt.% or more, based on the weight of the printed article (amount of powder composition to be solidified plus the liquid binder added). The liquid binder may be used in an amount of 45 wt.% or less, such as 40 wt.% or less, or 35 wt.% or less, based on the weight of the printed article (amount of powder composition to be solidified plus the liquid binder added). The liquid binder can for example be used in a range between any of the above-mentioned values, such as in a range of from 15 to 45, preferably from 20 to 35 wt.%, based on the weight of the printed article (amount of powder composition to be solidified plus the liquid binder added).

The present invention further relates to use of the material system of the present invention for three-dimensional printing.

Furthermore, the present invention relates to a three-dimensional article prepared by three-dimensional printing using the material system according to the present invention.

According to the present invention, the three-dimensional article printing may comprise the steps of (a) providing a layer of the powder composition of the material system according to the present invention on the building platform of a 3D printer; (b) selectively applying by a printhead of the 3D printer a liquid binder of the material system according to the present invention to one or more areas of the layer, which are to be solidified; (c) repeating steps (a) and (b) layer-by-layer until a three-dimensional article of the desired shape has been formed; (d) curing the formed three-dimensional article.

All the variations and relative amounts of the powder composition and the liquid binder may be as described above. Curing may be achieved at room temperature, such as at temperatures in a range of from 18 to 25°C. Curing at room temperature may provide partial curing to obtain a green body of the article. After partial curing the formed three-dimensional article at room temperature to obtain a green body of the article further curing of the green body may be performed at elevated temperatures such as at temperatures above 40 °C, such as in a range of from 40 to 130 °C, or from 60 to 110 °C, to obtain the final cured three-dimensional article. Preferably, curing at elevated temperatures is performed after removing the unbound powder. Curing at room temperature may be performed for 30 hours or less, such as for 20 to 30 hours. Curing at elevated temperatures may be performed for 7 hours or less, such as 2 to 7 hours.

The three-dimensional article may exhibit a deflection Δz of less than 8 mm, such as less than 5 mm, in an oven stability test with a protrusion of 4 cm. The deflection Δz in an oven stability test with a protrusion of 4 cm may be determined as described below for the examples. A smaller deflection value Δz denotes good form stability in the curing step at elevated temperature, indicating more effective curing and/or monomer conversion at ambient conditions in the powder bed.

After curing the three-dimensional article at elevated temperatures, a final cured article may be obtained. According to the present invention, the final cured article may have a tensile strength of 20 MPa or more, such as 21 MPa or more, or 22 MPa or more. The final cured article of the present invention may have a tensile strength of 30 MPa or less such as 29 MPa or less, or 28 MPa or less. The final cured article of the present invention may have a tensile strength in a range of 20 to 30 MPa, such as 20 to 29 MPa, or 21 to 28 MPa. According to the present invention, the final cured article may have an elongation at break of 3.0% or more, such as 3.1% or more, or 3.2% more. The final cured article of the present invention may have an elongation at break of 7.0% or less such as 6.8% or less, or 6.6% or less. The final cured article of the present invention may have an elongation at break in a range of 3.0 to 7.0%, such as 3.0 to 6.8%, or 3.1 to 6.6%. The tensile strength and the elongation at break can be determined according to DIN EN ISO 527-1 as further described below for the examples. High tensile strength and elongation at break indicate better binding between particles, lower porosity and better mechanical stability.

### EXAMPLES

All parts and percentages mentioned herein are based on weight, unless indicated otherwise.

### Powder composition

Degacryl^{®} bead polymers commercially available from Evonik Industries were mixed in the relative amounts indicated in Table 1 to form a homogeneous powder composition. The glass transition temperature (Tg) of the polymer particles was measured by means of a differential scanning calorimeter (DSC) from Mettler Toledo GmbH (USA) according to DIN EN ISO 11357.

**Table 1: Powder composition**

| **Powder component** | **Wt.%** |
|---|---|
| A¹ | 80 |
| B² | 15 |
| C³ | 5 |

| | |
|---|---|
| ¹: Degacryl^{®} acrylic polymer bead MW332 with T_{g}: 98°C, (from Evonik Operations GmbH) ²: Dibenzoyl peroxide containing Degacryl^{®} acrylic polymer bead 6658F with T_{g}: 108°C (from Evonik Operations GmbH) ³: Dibenzoyl peroxide containing Degacryl^{®} acrylic polymer bead 6659F with T_{g}: 60°C (from Evonik Operations GmbH) T_{g} refers to the glass transition temperature as determined by differential scanning calorimetry. | |

### Liquid binder

Liquid binder compositions were prepared by adding hydroxyethyl methacrylate (HEMA), hydroxybutyl acrylate (HBA), ethyl methacrylate (EMA), ethylene glycol dimethacrylate (EGDMA), dimethyl succinate (DMS), diethanol para-toluidine (DEPT) and triphenylphosphine (TTP) in the relative amounts specified in Table 2 in a 1 L glass vessel. The mixture was each homogenized by stirring for 2 h at ambient temperature yielding a clear, colorless liquid. The viscosity of the thus obtained binder formulations was measured with a Malvern Instruments Kinexus Standard rheometer manufactured by Malvern Pananalytical Ltd. at a temperature of 30°C and a shear rate of 1000 s⁻¹. The density of the formulations was measured with a tensiometer K100 MK3 manufactured by Krüss GmbH. Furthermore, the surface tension of the formulations was also measured with the K100 MK3 tensiometer using the Wilhelmy-method. The results of these measurements are included in Table 2.

**Table 2: Binder compositions and properties**

| **Component** | **Example 1** | **Example 2 (Comparative Example)** |
|---|---|---|
| | **Parts by weight** | **Parts by weight** |
| HEMA⁴ | 21.6 | 22.7 |
| HBA⁵ | 60.6 | 63.7 |
| DMS⁶ | 10.8 | 11.4 |
| EMA⁷ | 4.7 | 0 |
| EGDMA⁸ | 2 | 2 |
| DEPT⁹ | 0.15 | 0.15 |
| TTP¹⁰ | 0.06 | 0.06 |

| **Property** | | |
|---|---|---|
| Viscosity [mPas] | 3.7 | 4.8 |
| Density [g/mL] | 1.04 | 1.05 |
| Surface tension [mN/m] | 36.3 | 36.8 |

| | | |
|---|---|---|
| ⁴: hydroxyethyl methacrylate (from Röhm GmbH), vapor pressure (@20°C): 0.08 hPa ⁵: hydroxybutyl acrylate (from Tokyo Chemicals Co. Ltd.), vapor pressure (@20°C): 0.005 hPa ⁶: dimethyl succinate (from Merck KGaA) ⁷: ethyl methacrylate (from Merck KGaA), vapor pressure (@20°C): 20 hPa ⁸: ethylene glycol dimethacrylate (from Evonik Operations GmbH), vapor pressure (@20°C): 0.01 hPa ⁹: diethanol para-toluidine (from Saltigo GmbH) ¹⁰: triphenylphosphine (from Merck KGaA) | | |

### 3D Printing

Test specimen were prepared by 3D printing using the above-described powder composition in combination with the formulation according to Example 1 or the formulation according to Comparative Example 2, respectively, as liquid binder. 3D printing was carried out with a VX200 binder jetting machine manufactured by voxeljet AG (Friedberg, Germany), equipped with a Spectra Nova 256 print head. For 3D printing the respective liquid binder formulation was filled into the fluid supply of the 3D printer. Powder layers having a thickness of about 150 µm were successively applied from the powder composition by the coating unit of the 3D printer on the building platform and liquid binder locally applied thereto by the printhead of the 3D printer according to a predetermined profile to build the test specimen layer by layer. The liquid binder was used herein at a binder load of 28 wt.%. Binder load means the amount of binder with regard to the overall mass of powder and binder of an individual voxel. Rectangular test specimen having dimensions of 80 x 40 x 10 mm for oven stability tests as well as tensile test specimens having test specimen shape 1A according to DIN EN ISO 527-1 were thus printed oriented in a plane (xy) parallel to the building platform. The used liquid binder compositions were well printable without any processing problems encountered. After the printing process, the green bodies of the test specimens were left for 24 h in the powder bed at ambient conditions. Afterwards, the test specimens were taken out of the powder bed and mechanically freed from powder residues. Subsequently, the test specimens were heated to 70 °C for 5 h in a drying oven of type FDL 115 manufactured by the Binder GmbH (Tuttlingen, Germany).

The green body strength of the test specimen taken out of the powder bed after the 24 h dwell time at ambient conditions was measured. To this end, a tensile test specimen was subjected to a needle penetration test. A needle with a tip diameter of 1.0 mm was positioned with its long axis perpendicular to and its tip in contact with the surface of the test specimen. A load of 1.220 kg was applied onto the needle. After 60 s, the penetration depth under load was recorded as a measure of the green body strength. Due to the thickness of 4 mm of the test specimen in the direction of penetration, the penetration depth can have values between 0 (no penetration) and 4 mm (full penetration of the test specimen).

Furthermore, the printed test specimens were tested for their form stability in the curing step at elevated temperature. To this end, the printed rectangular test specimens were subject to an oven stability test as follows. The rectangular test specimens taken out of the powder bed after the 24 h dwell time at ambient conditions were put on metal blocks with free standing protrusions of either 40 x 10 x 4 mm or 50 x 10 x 4 mm. A weight is each put on top of the portion of the specimen supported on the metal block to avoid tilting of the test specimen. The test specimens were then heated to 70 °C for 5 h in the drying oven of type FDL 115 manufactured by the Binder GmbH (Tuttlingen, Germany). The free-standing protruding portion of the test specimens bent downwards under the effect of heating. The deflection of the free end of the test specimen in the vertical direction (Δz) from the initial unbent position in mm was determined by means of a caliper gauge after the oven curing as a measure of the form stability in the curing step at elevated temperature (also referred to herein as "oven stability"). A smaller deflection value Δz indicates a better oven stability. Relatively large protrusions of 40 and 50 mm length were chosen to create a significant, easy to measure deflection and provide test results for different protrusions lengths.

The tensile test specimens were moreover investigated for their mechanical properties after the curing at 70 °C for 5 h in the oven. To this end, the oven cured tensile test specimen were characterized by tensile testing according to DIN EN ISO 527-1 with a pre-load of 10 N, a tensile modulus velocity of 1 mm/min, a testing speed of 20 mm/min and a clamping length of 115 mm using a tensile testing machine of type Zwick 1145 Retro Line manufactured by ZwickRoell GmbH & Co. KG.

Table 3 summarizes the green body strength, oven stability, tensile strength and elongation at break measured for the test samples printed using the formulation according to Example 1 or the formulation according to Comparative Example 2, respectively, as liquid binder. The reported values each represent arithmetic averages of the results measured for five test specimens.

**Table 3: Properties of 3D printed articles**

| **Property** | **Liquid binder used for printing** | |
|---|---|---|
| | **Example 1** | **Example 2 (Comparative Example)** |
| Penetration depth in needle penetration test for green body strength | 1 mm | 1.2 mm |
| Deflection Δz in oven stability test with 40 mm protrusion | 7.5 mm | 9.5 mm |
| Deflection Δz in oven stability test with 50 mm protrusion | 14.0 mm | 15.3 mm |
| Tensile strength at break | 25 MPa | 23 MPa |
| Elongation at break | 5% | 3% |

The results shown in Table 3 show that the printed test specimen attain sufficient green body strength upon storage for 24 h at room temperature, which allows handling of the green bodies without deformation or damage. The articles printed using the powder composition according to the present invention (Example 1) exhibit as indicated by the penetration depth in needle penetration test for green body strength slightly enhanced form stability upon curing at elevated temperatures compared to those obtained from Comparative Example 2. This facilitates the curing of the printed parts, especially the free standing portions, at elevated temperatures to achieve final properties outside of the powder bed without thermally-induced deformations and without the need of a support structure.

The articles printed using the liquid binder formulation according to the present invention containing a volatile monomer (ethyl methacrylate) (Example 1) exhibit as indicated by the lower deflections Δz in the oven stability test significantly enhanced form stability in the curing step at elevated temperature compared to those obtained from a binder formulation without such volatile monomer (Comparative Example 2), indicative of a more effective curing and/or monomer conversion at ambient conditions in the powder bed.

Furthermore, the printed articles obtained using the material system according to the present invention exhibit enhanced mechanical properties, notably a greater tensile strength and elongation at break, compared to those of the Comparative Example.

In addition, test specimens were printed as set forth above using the material system according to the present invention at different positions of the build chamber and also in different orientations (in the xy, xz, or zx plane) to investigate possible anisotropies based on object orientation or position in the powder bed. In 3D printing, printed parts often exhibit significant orientation-based anisotropies in their mechanical properties, for example a declining tensile strength, toughness and elongation in z-direction associated with non-optimal interlayer adhesion. On the contrary, it was found that the articles printed using the material system according to the present invention did not show an anisotropy of their tensile and flexural properties. This indicates that a good interlayer adhesion is achieved, with a sufficient amount of binder in the powder bed and sufficient time for the binder to fully penetrate the 150 µm thick layer and connect with the layer beneath.

## Claims

1. A material system for three-dimensional printing comprising:
(a) a powder composition comprising polymer particles, and
(b) a liquid binder comprising a material polymerizable by free radial polymerization comprising from 1 to 20 wt.% of one or more than one volatile ethylenically unsaturated monomer(s) having a vapor pressure in a range from 5 to 500 hPa at a temperature of 20°C, based on the total weight of the liquid binder.

2. The material system according to claim 1, wherein the powder composition and the liquid binder are provided as separate components, wherein the liquid binder is printable onto a layer of the powder composition.

3. The material system according to any one of claims 1 or 2, wherein (a) the powder composition comprises an initiator and the liquid binder comprises a catalyst or accelerator for a free radical polymerization reaction, or (b) the powder composition comprises a catalyst or accelerator for a free radical polymerization reaction and the liquid binder comprises an initiator, wherein the initiator, catalyst or accelerator is preferably used in an amount in a range from 0.001 to 5 wt.%, more preferably from 0.01 to 1 wt.%, based on the total weight of the powder composition or the liquid binder, respectively, wherein the initiator preferably comprises an organic peroxide, preferably an aromatic peroxide, such as dibenzoyl peroxide; and/or
wherein the accelerator preferably comprises an amine, preferably a tertiary amine, such as dimethyl-p-toluidine, dihydroxyethyl-p-toluidine or 4-dimethylamino phenethyl alcohol.

4. The material system according to any one of the preceding claims, wherein the polymer particles comprise acrylic polymer particles, preferably made by suspension polymerization; and/or
wherein the powder composition comprises a plurality of different types of acrylic polymer particles.

5. The material system according to claim 4, wherein the powder composition comprises a first type of acrylic polymer particles, preferably comprising at least 60 wt.% of structural units derived from methyl methacrylate,
wherein the first type of acrylic polymer particles preferably is present in the powder composition in an amount from 60 to 95 wt.%, based on the total weight of the powder composition.

6. The material system according to claim 5 further comprising a second type of acrylic polymer particles, which is different from the first type of acrylic polymer particles and has a glass transition temperature, as determined by differential scanning calorimetry, of less than 80°C, such as in a range from 40°C to 70°C, and/or a third type of acrylic polymer particles, which is different from the first type of acrylic polymer particles and has a glass transition temperature, as determined by differential scanning calorimetry, of 80°C or more, such as in a range from 90°C to 130°C,
wherein the second type of acrylic polymer particles and/or the third type of acrylic polymer particles preferably comprise an initiator, catalyst or accelerator for a free radical polymerization reaction, preferably an initiator.

7. The material system according to claim 6, wherein the second type of acrylic polymer particles comprise a copolymer obtained by copolymerizing a monomer mixture comprising a plurality of different (meth)acrylate monomers, the copolymer preferably comprising at least 60 wt.% of structural units derived from methyl methacrylate; and/or wherein the third type of acrylic polymer particles comprise polymethyl methacrylate, preferably comprising at least 60 wt.% of structural units derived from methyl methacrylate.

8. The material system according to any one of claims 6 or 7, wherein the powder composition comprises from 1 to 15 wt.% of the second type of acrylic polymer particles and/or comprises from 1 to 25 wt.% of the third type of acrylic polymer particles, based on the total weight of the powder composition.

9. The material system according to any one of the preceding claims, wherein the polymer particles, such as the first type acrylic polymer particles, the second type of acrylic polymer particles and/or the third type of acrylic polymer particles, have a sphericity in a range from 0.9 to 1.0 and/or have a median particle size Dv50 in a range from 10 to 100 µm, preferably from 30 to 70 µm, and/or have a particle size distribution with a span (Dv90-Dv10)/Dv50 in a range from 0.7 to 1.3, as determined by dynamic light scattering.

10. The material system according to any one of the preceding claims further comprising one or more than one flow agent, preferably in an amount of 0.01 to 0.5 wt.%, based on the total weight of the powder composition; and/or
wherein the powder composition has a bulk density in a range from 600 to 750 g/L, such as from 650 to 720 g/L.

11. The material system according to any one of the preceding claims, wherein the one or more than one volatile ethylenically unsaturated monomer(s) having a vapor pressure in a range from 5 to 500 hPa at a temperature of 20°C is selected from the group consisting of methyl acrylate, methyl methacrylate, ethyl acrylate, ethyl methacrylate, propyl acrylate, propyl methacrylate, n-butyl acrylate, i-butyl acrylate, styrene, ethyl vinyl ether, divinylether, n-propyl vinyl ether, n-butyl vinyl ether, i-butyl vinyl ether and mixtures or combinations thereof; and/or
wherein the one or more than one volatile ethylenically unsaturated monomer(s) have a vapor pressure in a range from 10 to 100 hPa, such as from 10 to 30 hPa, at a temperature of 20°C; and/or
wherein the liquid binder comprises the one or more than one volatile ethylenically unsaturated monomer(s) in an amount from 2 wt.% to 10 wt.%, such as from 3 wt.% to 7 wt.%, based on the total weight of the liquid binder.

12. The material system according to any one of the preceding claims, wherein the polymerizable material further comprises in addition to the one or more than one volatile ethylenically unsaturated monomer(s) one or more than one type of mono-ethylenically unsaturated monomers, preferably selected from (meth)acrylate monomers, and optionally one or more than one crosslinker, preferably a compound with two or more ethylenically unsaturated moieties, such as (meth)acrylate and/or allyl moieties, per molecule,
wherein the binder preferably comprises one or more than one hydroxyalkyl(meth)acrylate monomer and one or more than one bi- or higher functional (meth)acrylate, for example from 50 to 99 wt.% hydroxyalkyl(meth)acrylate monomer(s), and from 1 to 5 wt.% bi- or higher functional (meth)acrylate(s).

13. The material system according to claim 12, wherein the binder comprises at least 50 wt.% of one or more than one (meth)acrylate monomer(s) that individually yield(s) a homopolymer having a glass transition temperature below 0°C, such as below -40°C, such as hydroxybutyl acrylate.

14. The material system according to any one of the preceding claims, wherein the binder further comprises an oxygen scavenger,
wherein the oxygen scavenger preferably comprises a trivalent phosphorous compound, wherein the trivalent phosphorous compound preferably comprises a phosphine, a phosphite or a combination or mixture thereof;
wherein the phosphine preferably comprises a trialkylphosphine and/or a triarylphosphine and/or wherein the phosphite preferably comprises a trialkylphosphite and/or a triarylphosphite, the trivalent phosphorous compound more preferably comprising triphenylphosphine, triethyl phosphine, triphenylphosphite, triethylphosphite, or a mixture or combination thereof.

15. The material system according to claim 14, wherein the binder comprises the trivalent phosphorous compound in an amount from 0.001 to 10 wt.%, preferably from 0.01 to 1 wt.%, more preferably from 0.05 to 0.2 wt.%, based on the total weight of the binder.

16. The material system according to any one of the preceding claims, wherein the liquid binder further comprises one or more than one additive selected from solvents, fillers, rheology modifying agents like viscosity modifiers, shrinkage minimizing agents, retardants, pH modifying agents, stabilizing agents, biocides, surfactants, humectants, wetting agents and colorants; and/or
wherein the liquid binder has a viscosity in a range from 1 to 50 mPas and/or a surface tension in a range from 20 to 50 mN/m.

17. Use of a material system according to any one of claims 1 to 16 for three-dimensional printing.

18. A three-dimensional article prepared by three-dimensional printing using a material system according to any one of claims 1 to 16.

19. The three-dimensional article according to claim 18, wherein the three-dimensional printing comprises the steps of:
(a) providing a layer of the powder composition of the material system according to any one of claims 1 to 16 on a building platform of a 3D printer,
(b) selectively applying by a printhead of the 3D printer a liquid binder of the material system according to any one of claims 1 to 16 to one or more areas of the layer, which are to be solidified,
(c) repeating steps (a) and (b) layer-by-layer until a three-dimensional article of the desired shape has been formed, and
(d) curing the formed three-dimensional article.

20. The three-dimensional article according to any one of claims 18 or 19 exhibiting a deflection Δz of less than 8 mm, such as less than 5 mm, in an oven stability test as described herein with a protrusion of 4 cm; and/or
wherein the final cured article has a tensile strength at break of 20 MPa or more and/or a tensile elongation at break of 3.0% or more.
